# EUROPÄISCHE PATENTSCHRIFT

(11) **EP 2 033 758 B1**
(45) Veröffentlichungstag und Bekanntmachung des Hinweises auf die Patenterteilung: **09.11.2016**
(21) Anmeldenummer: 07017382.8
(22) Anmeldetag: 05.09.2007
(51) Int. Cl.: B29C 44/34, B29K 105/04, B29K 105/12

(54) **Verfahren und Vorrichtung zur Herstellung von faserverstärkten Kunststoffformteilen**
Method and device for manufacturing fibre-reinforced plastic moulded articles
Procédé et dispositif destinés à la fabrication de pièces de formage en matière synthétique renforcées par des fibres

(43) Veröffentlichungstag der Anmeldung: 11.03.2009
(73) Patentinhaber: SMP Deutschland GmbH, 79268 Bötzingen (DE)
(72) Erfinder: Schirmer, Hans, 68600 Heiteren (FR); Mujadzic, Erim, 79219 Staufen (DE)
(74) Vertreter: Westphal, Mussgnug & Partner Patentanwälte mbB

(56) Entgegenhaltungen:
- EP-A- 1 719 600
- EP-A- 1 815 962
- EP-A2- 0 423 676
- DE-A1- 19 853 021
- GB-A- 1 303 517
- US-A- 5 160 674

## Beschreibung

Die vorliegende Erfindung betrifft ein Verfahren zur Herstellung von faserverstärkten Kunststoffformteilen, insbesondere Innenverkleidungen von Kraftfahrzeugen, gemäß Anspruch 1, sowie eine Vorrichtung zur Herstellung von faserverstärkten Kunststoffformteilen gemäß Anspruch 12. EP 1 815 962 A1 offenbart ein Verfahren und eine Vorrichtung mit den Merkmalen des Oberbegriffs der Ansprüchen 1 und 12.

Aus der WO 02/26482 A1 ist bekannt, faserverstärkte Kunststoffformteile herzustellen, indem mit Stärkungsfasern vorvermischtes Kunststoffgranulat in einem Extruder plastifiziert, mit einem physikalischen Treibmittel versetzt und dann unter Druck in die Formkavität eines Spritzgießwerkzeugs eingebracht wird. Der Eintrag der Glasfasern erfolgt hierbei über vorkonfektioniertes Kunststoffgranulat, welches einen definierten Anteil an Glasfasern besitzt. Durch die Schneckenrotation werden die Glasfasern derart beansprucht, dass nach Ende der Plastifizierung die Glasfaserlängen stark reduziert sind, was zu einer Beeinträchtigung der mechanischen Kennwerte der herzustellenden Bauteile führt.

Eine weitere Möglichkeit thermoplastische Schäume im Spritzgussprozess mit Hilfe physikalischer Treibmittel herzustellen, ist in der WO 98/31521 A2 beschrieben. Das Treibfluid wird mit Hilfe einer Gasdosierstation während der Dosierphase über mehrere Eingasungsports am Plastifizierzylinder direkt in die Schmelze injiziert und anschließend über Schneckenmischteile homogenisiert. Die Schneckenmischteile führen auch bei dieser Variante wiederum zu einer unerwünschten Zerkleinerung der Glasfasern und damit zu einer Verschlechterung der mechanischen Eigenschaften des Endprodukts.

Allgemein wurde gefunden, dass es bei Verfahren, wie sie in der WO 02/26482 A1 und WO 98/31521 A1 beschrieben sind, stets zu einer Schädigung der Fasern und damit zu einer Produktverschlechterung kommt, selbst wenn die Schneckenmischteile besonders materialschonend ausgeführt sind, um diesen Effekt zu mindern.

In der DE 10 2005 027 374 A1 hat man versucht die oben geschilderten Schwierigkeiten dadurch zu umgehen, dass man in einer Spritzgießanlage ein Spritzaggregat mit drei von einander getrennten Einlässen vorgesehen hat, wobei ein erster Einlass für den thermoplastischen Kunststoff für die Faserverbundmatrix, ein weiterer Einlass für die Verstärkungsfasern und ein dritter Einlass für das Treibmittel vorgesehen sind, wobei als Treibmittel ein chemisches Treibmittel eingesetzt wird. Chemische Treibmittel haben zwar den Vorteil, dass sie einfach zu dosieren sind und leicht in der Schmelze durch entsprechendes Mischen homogen verteilt werden können, haben jedoch den Nachteil, dass die bei der Zersetzung anfallenden Restprodukte, welche ein Anteil bis zu 60% erreichen können, zu einer Degradation der Polymermatrix mit Verschlechterungen der mechanischen Eigenschaften und Verfärbungen führen können. Darüber hinaus haben chemische Treibmittel aufgrund der relativ geringen Gasausbeute den Nachteil, dass nur begrenzte Aufschäumgrade erzielt werden können.

In der DE 101 503 29 C2 wird ein Verfahren beschrieben, ein komprimiertes Treibgas über einen statischen Mischer, der zwischen Plastifizieraggregat und Verschlussdüse des Formwerkzeugs angeordnet ist, mit der Polymerschmelze in Kontakt zu bringen. Dabei dient eine poröse Sintermetallfläche, welche den Mischraum umschließt, als Kontaktelement zwischen Treibmittel und Polymerschmelze. Um die Durchmischung der Kunststoffschmelze zu verbessern, ist vorgesehen, dass der statische Mischer Stege aufweist, die in die Kunststoffschmelze hineinragen, um damit eine mehrfache Umlagerung der Schmelze zu bewirken. Diese Technologie erfordert relativ hohe Investitionen in eine Gasdosierstation, die in der Lage ist, in kurzer Zeit die Polymerschmelze homogen mit Treibgas zu versetzen. Die Zufuhr des Treibgases selber erfolgt während des Einspritzens, das in der Regel mit hoher Geschwindigkeit und in kurzer Zeit durchgeführt wird, was ebenfalls eine homogene Durchmischung der Polymerschmelze mit Treibgas erschwert. So besitzen die so hergestellten Kunststoffformteile zwar ein geringes spezifisches Gewicht, verfügen aber trotz der Faserverstärkungen nur über eine begrenzte Stabilität.

Ein ähnliches Verfahren zur Herstellung geschäumter Kunststoffformteile ist in der DE 198 53 021 A1 beschrieben ist. Auch bei diesem Verfahren wird ein physikalisches Treibmittel in den Schmelzestrom einer konventionellen Spritzgießmaschine eingebracht. Das Verfahren weist die gleichen Nachteile in gleichem Maße auf, wie bereits bei der DE 101 503 29 C2 geschildert.

Der Erfindung lag somit das Problem zugrunde, ein Verfahren und eine Vorrichtung zur Herstellung von faserverstärkten Kunststoffformteilen, insbesondere für Innenverkleidungen von Kraftfahrzeugen, zur Verfügung zu stellen, die die oben aufgeführten Nachteile des Standes der Technik nicht aufweisen.

Gelöst wird diese Aufgabe durch ein Verfahren mit den Merkmalen des Anspruchs 1 sowie eine Vorrichtung mit den Merkmalen des Anspruchs 12.

Das erfindungsgemäße Verfahren sieht vor, dass zunächst in einer Plastifiziereinheit, wie zum Beispiel einem Schneckenextruder, ein Granulat eines thermoplastischen Kunststoffes unter Erwärmen plastifiziert wird, dann die Verstärkungsfasern der Plastifiziereinheit zugeführt werden und die Polymerschmelze nach dem Einbringen der Verstärkungsfasern in der Plastifiziereinheit entlüftet wird.

Beispiele für vorteilhafte einsetzbare thermoplastische Kunststoffe sind Polypropylen (PP), Polyethylen (PE), Polypropylenterephthalat (PBT), Polyamid (PA), Polystyrol (PS), Polycarbonat (PC),Polymethylmethacrylat (PMMA), Acrylnitril-Butadien-Styrol (ABS), Acrylnitril-Butadien-Styrol / Polycarbonat Copolymerisat (ABS-PC), Polyoxymethylen (POM) oder auch Mischungen davon.

Als Fasern eignen sich Glasfasern, Karbonfasern, Nylonfasern, aber auch textile Naturfasern. Vorteilhaft können bspw. für das erfindungsgemäße Verfahren Endlosglasfasern eingesetzt werden, die bei der Zugabe in die Plastifiziereinheit in einem passenden, vorgeschalteten Zerkleinerungsaggregat zerkleinert werden. Als Zerkleinerungsaggregat für Endlosglasfasern eignet sich bspw. eine Schlagmühle oder eine vergleichbar arbeitende Einrichtung, die es erlaubt Glasfasern mit einer bestimmten Faserlänge herzustellen.

In einem zweiten Schritt wird die Fasern enthaltende, entlüftete Polymerschmelze in einen separaten Übergabezylinder überführt, der zwischen der Plastifiziereinheit und dem Einspritzzylinder eines Spritzwerkzeugs angeordnet ist. Dort wird die Polymerschmelze über eine Begasungseinheit mit einem physikalischen Treibmittel versetzt.

Die Zuführung des physikalischen Treibmittels, das anschließend in der Polymerschmelze gelöst vorliegen soll, ist erst nach einer Entlüftung sinnvoll, da zunächst die mit der Einbringung der Glasfaser in die Schmelze ungewollt eingeschleppte Luft entfernt werden muss, um eine homogene Lösung des Treibmittels in der Polymerschmelze erreichen zu können. Vorteilhaft kann die Begasungseinheit ein mit Treibmittel beaufschlagtes zumindest teilweise poröses Hohlzylinderelement umfassen, wie es in der DE 101 503 29 C2 beschrieben ist, wobei das Hohlzylinderelement von einer Druckkammer umgeben ist, die in Fluidverbindung mit einer Quelle für ein physikalisches Treibmittel steht. Die Bereitstellung des Treibmittels erfolgt direkt aus einer Druckgasflasche bzw. einem Versorgungstank oder mit Hilfe einer Gasdosierstation.

Das Hohlzylinderelement kann entweder über eine mit dem physikalischen Treibmittel beaufschlagte poröse Kontaktfläche aus Sintermetall oder über separate, ebenfalls mit dem physikalischen Treibmittel beaufschlagte Einlässe aus gasdurchlässigem Material mit der Polymerschmelze in Verbindung stehen.

Die Größe des Übergabezylinders und die Verweilzeit der Schmelze im Übergabezylinder reichen aus, dass weitere Maßnahmen ergriffen werden können, um die Verteilung des Treibmittels in der Schmelze zu optimieren.

So kann bei einer vorteilhaften Ausführungsform im Hohlzylinderelement ein statischer Mischer fixiert sein, der vorteilhaft zumindest teilweise in die Polymerschmelze hineinragende Stege als Mischelemente aufweist. Über die poröse Hohlzylinderfläche wird die Polymerschmelze mit Treibmittel beladen, wobei die Anreicherung der Schmelze mit Treibmittel zunächst aufgrund von Druck und Konzentrationsunterschieden in der Randschicht unmittelbar an der porösen Sintermetallhülse erfolgt. Die Fusionsvorgänge innerhalb der Polymerschmelze sowie die in den Schmelzkanal hineinreichenden Stege des statischen Mischers sorgen für eine Umlagerung und Homogenisierung des Polymertreibmittelgemischs.

Bei einer bevorzugten Ausgestaltung wird der statische Mischer, die Begasungseinheit und/oder auch der Übergabezylinder mit Hilfe von elektrischen Heizbändern temperiert, um den plastischen Zustand der Kunststoffschmelze aufrechtzuerhalten.

Der statische Mischer kann modular aufgebaut sein, so dass unterschiedliche Durchmesser oder Längen realisiert werden können, um damit das Mischervolumen dem Volumen des zu spritzenden Formteils anzupassen. In diesem Fall wird auch das Volumen des Begasungseinheit entsprechend angepasst.

Es können auch Begasungseinheiten in Analogie zu der in der DE 198 530 21 A1 beschriebenen Ausführungsform eingesetzt werden, bei der das Treibmittel zusätzlich über die poröse Oberfläche eines in den Schmelzkanal eingebauten Torpedos eingebracht wird. Auf diese Weise kann die mit der Schmelze in Kontakt stehende Oberfläche enorm vergrößert und somit die Durchmischung der Schmelze mit Treibmittel verbessert werden.

Die Begasungseinheiten können prinzipiell zusätzlich mit statischen oder dynamischen Mischern kombiniert werden, die im Übergabezylinder entweder im Hohlzylinderelement der Begasungseinheit selber angeordnet oder der Begasungseinheit nachgeordnet sind.

Das Einspritzen der Polymerschmelze in die Formkavität erfolgt diskontinuierlich, wobei bei einer Ausgestaltung der Erfindung vorgesehen ist, dass es beim Einströmen der plastifizierten Schmelze in das Formwerkzeug bzw. die Werkzeugkavität zum Druckabfall der unter Druck stehenden Schmelze kommt und die Expansion des in der Schmelze gelösten Treibmittels zum Aufschäumen des polymeren Materials führt. Das Resultat ist ein faserverstärktes Kunststoffformteil mit einem eine Schaumstruktur aufweisenden Kern und schaumfreien Deckschichten, die sich an der Werkzeugoberfläche ausbilden.

Eine weitere vorteilhafte Ausgestaltung der Erfindung sieht vor, Formwerkzeuge einzusetzen, die eine zeitlich und volumengesteuerte Expansion der Formkavität erlauben. Bei dieser Ausführungsvariante ist vorgesehen, dass die Formkavität zunächst vollständig mit dem Gemisch aus Treibmittel, Verstärkungsfasern und Kunststoffmatrix befüllt wird und das Gemisch anschließend durch eine gesteuerte Expansion der Formkavität aufgeschäumt wird. Auf diese Weise lässt sich die Dicke der schaumfreien Deckschichten bzw. des Schaumkerns gezielt einstellen und es können Kunststoffformteile mit hervorragenden mechanischen Eigenschaften hergestellt werden, deren Gewicht und Festigkeit den jeweiligen Erfordernissen gezielt angepasst werden kann.

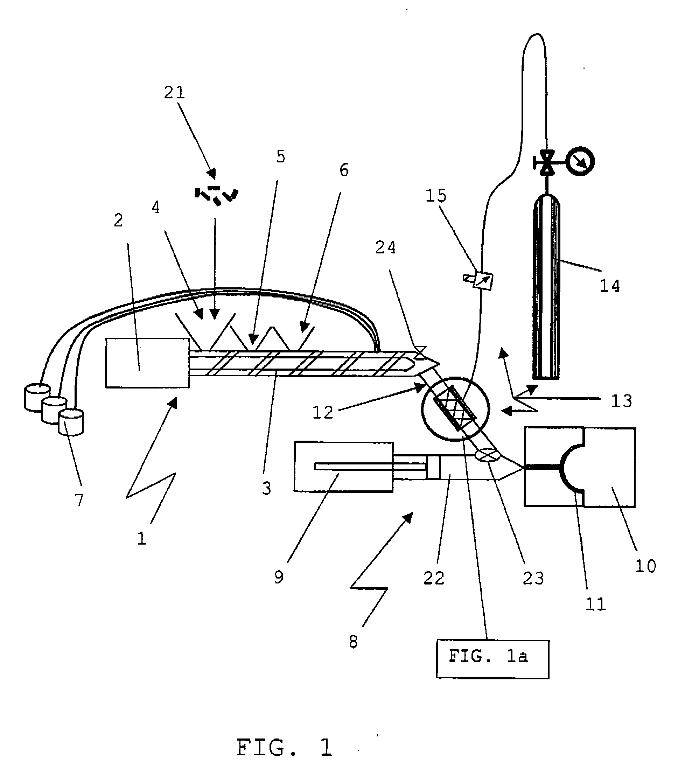

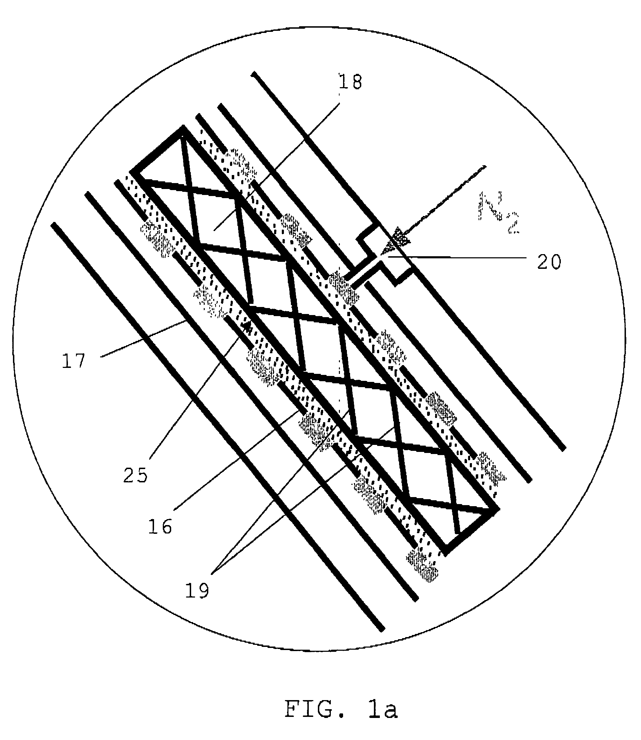

Im Folgenden wird die Erfindung anhand eines Ausführungsbeispiels in Verbindung mit den Zeichnungen näher erläutert. Dabei zeigt Figur 1 eine schematische Schnittdarstellung des Verfahrens und Figur 1a einen Ausschnitt aus Figur 1.

In der Figur 1 ist das gesamte Ablauf des erfindungsgemäßen Verfahrens stark schematisiert wiedergegeben. Im ersten Verfahrensschritt wird ein Kunststoffgranulat 21 in einer Plastifiziereinheit 1 aufgeschmolzen und dabei mit Verstärkungsfasern 7 versetzt. Die Plastifiziereinheit 1 umfasst einen konventionellen Schneckenextruder 2 mit mehreren separaten Einlässen 4, 5, 6, die hintereinander angeordnet sind, wobei der erste Einlass 4 für die Zugabe des Granulats 21 vorgesehen ist. Nachfolgend sind die Einlässe 5, 6 für die optionale Zuführung von Additiven angeordnet.

Im vorderen Drittel der Plastifiziereinheit 1 werden die Glasfasern 7 zugeführt, wobei nach der Zuführung der Glasfasern 7 an der Spitze der Plastifiziereinheit 1 eine Einrichtung 24 zum Entlüften der Polymerschmelze vorgesehen ist, um die beim Einbringen der Glasfasern 7 ungewollt eingeschleppte Luft aus der Schmelze zu entfernen.

Die in der Plastifiziereinheit 1 erzeugte, mit Fasern versetzte und entlüftete Kunststoffschmelze wird in den Übergabezylinder 12 überführt und passiert dort eine Begasungseinheit 13, wo sie mit dem physikalischen Treibmittel, vorzugsweise N₂- oder CO₂-Gas, beaufschlagt wird. Die Begasungseinheit 13 umfasst ein poröses Hohlzylinderelement 16 mit einer porösen Kontaktfläche 24 aus Sintermetall, das von einer Druckkammer 17 umgeben ist und mit dem physikalischen Treibmittel beaufschlagt wird. In dem Hohlzylinderelement 16 ist ein statischer Mischer 18 fixiert, der zumindest teilweise in die Polymerschmelze hineinragende Stege 9 als Mischelemente aufweist. Als Treibgasquelle 14 kann wie im vorliegenden Fall eine einfache Druckgasflasche mit einem Regelventil eingesetzt werden oder ein Gasdosierstation, die die Gasdosierung automatisch regelt.

Alternativ können im Hohlzylinder anstatt der Kontaktfläche auch einzelne Einlässe aus gasdurchlässigem Material vorgesehen sein, oder es können Begasungseinheiten in Analogie zu der in der DE 198 530 21 A1 beschriebenen Ausführungsform eingesetzt werden, bei der das Treibmittel über die Sintermetalloberfläche eines in den Schmelzkanal eingebauten Torpedos und ein den Schmelzekanal umgebendes Sintermetallteil eingebracht wird.

Das Volumen des Reaktionsraums 12 ist so gewählt, dass die Strömungsgeschwindigkeit der Kunststoffschmelze in der Misch- und Begasungseinheit relativ niedrig gehalten wird, so dass eine ausreichende und gleichmäßige Beladung mit Gas gewährleistet ist, wobei gleichzeitig der Verschleiß gering gehalten wird und eine materialschonende Verarbeitung gegeben ist.

Vom Übergabezylinder 12 wird die mit Treibgas beladene und Fasern enthaltende Kunststoffschmelze in den Einspritzzylinder 22 überführt, von wo die Schmelze mit hohem Spritzdruck in die Kavität 11 des Formwerkzeugs 10 eingespritzt wird.

Bei der in Figur 1 gezeigten Ausführung ist zwischen Übergabezylinder 12 und Einspritzzylinder 22 eine Rückstromsperre 23 vorgesehen, die beim Einspritzen des Polymermaterials in die Kavität 11 des Formwerkzeugs 10 einen Rückstrom der Schmelze in den Entgasungsbereich der Plastifiziereinheit 1 verhindert.

Zusätzlich oder alternativ kann zum gleichen Zweck auch eine Rückstromsperre zwischen der Begasungseinheit 13 und der Plastifiziereinheit 1 vorgesehen sein. Des weiteren ist es auch möglich, den Übergabezylinder 12 und den Einspritzzylinder 22, wie in Figur 1 gezeigt, zueinander anzuordnen, ohne eine derartige Sperre vorzusehen, so dass die beiden Räume direkt miteinander verbunden sind, wobei dann der Prozess so gesteuert werden muss bzw. zusätzliche konstruktive Maßnahmen ergriffen werden müssen, die eine Abtrennung zwischen Einspritzzylinder 22 und Übergabezylinder 12 überflüssig machen.

Im Übergangszylinder 12 und im Einspritzzylinder 22 wird der Spritzdruck in der Schmelze so hoch gehalten, dass das Gas in der Kunststoffmasse gelöst bleibt und die Polymermasse nicht aufschäumt. Das Aufschäumen der Kunststoffmasse erfolgt entweder beim Einspritzen in die Kavität 11 selber oder es wird bei einer vorteilhaften Ausgestaltung der vorliegenden Erfindung der Spritzdruck solange hoch gehalten, bis das Formwerkzeug 10 vollständig mit der Polymermasse gefüllt ist und zunächst eine Verfestigung einer nicht geschäumten Schicht an der Oberfläche der Kavität erfolgt und erst beim Expandieren der zusammengefahrenen Formkavität 11 ein Aufschäumen der Kunststoffmasse stattfindet.

Die Figur 1a zeigt eine Teilansicht der Misch- und Dosiereinheit mit dem Hohlzylinderelement 16, das in einer Druckkammer 17 angeordnet ist und mit Treibgas über den Gaseinlass 20 beaufschlagt wird. Im Hohlzylinderelement 16, das eine poröse Kontaktfläche 25 aus Sintermetall aufweist, ist ein statischer Mischer 18 fixiert, der Mischstege 19 aufweist, die in die plastifizierte Schmelze hineinragen und die Homogenisierung der Schmelze beschleunigen.

Die in den Figuren 1 und 1a gezeigte Ausgestaltung der vorliegenden Erfindung gibt lediglich eine von vielen möglichen Ausführungsformen des Erfindungsgedankens wieder. Weitere Möglichkeiten, zur Umsetzung des Erfindungsgedanken, ergeben sich für den Fachmann durch die Modifikation einzelner Verfahrensschritte bzw. der bei den Verfahrensschritten eingesetzten Aggregate, wovon einige Möglichkeiten bei der Figurenbeschreibung schon angedeutet wurden.

### Bezugszeichenliste

- 1: Plastifiziereinheit
- 2: Extruder
- 3: Schnecke
- 4: Einlass Granulat
- 5: Einlass Additive
- 6: Einlass Additive
- 7: Endlosglasfasern
- 8: Spritzwerkzeug
- 9: Kolbenpresse
- 10: Formwerkzeug
- 11: Formkavität
- 12: Übergabezylinder
- 13: Begasungseinheit
- 14: Treibgasquelle
- 15: Reduzierventil
- 16: Hohlzylinderelement
- 17: Druckkammer
- 18: Statischer Mischer
- 19: Mischstege
- 20: Gaseinlass
- 21: Kunststoffgranulat
- 22: Einspritzzylinder
- 23: Rückstromsperre
- 24: Entlüftung
- 25: Poröse Kontaktfläche

## Patentansprüche

1. Verfahren zur Herstellung eines faserverstärkten geschäumten Kunststoffformteils, wobei
a) in einem ersten Schritt aus einem Granulat (21) eines thermoplastischen Kunststoffs und Verstärkungsfasern (7) in einer Plastifiziereinheit (1) eine Fasern enthaltende Polymerschmelze erhalten wird,
b) in einem zweiten Schritt die Polymerschmelze mit einem physikalischen Treibmittel versetzt wird und
c) dann in einem dritten Schritt unter Druck über einen Einspritzzylinder (22) in eine Formkavität (11) eines Formwerkzeugs (10) eingespritzt wird, wobei als Plastifiziereinheit (1) ein Schneckenextruder (2) eingesetzt wird mit mehreren separaten, hintereinander angeordneten Einlässen (4,5,6), wobei der erste Einlass (4) für die Zugabe des Granulats (21) vorgesehen ist,
das Granulat (21) unter Erwärmen plastifiziert wird und dann die Verstärkungsfasern (7) der Plastifiziereinheit (1) zugeführt werden,
wobei im vorderen Drittel eine Zuführung für die Verstärkungsfasern (7) vorgesehen ist, **dadurch gekennzeichnet dass**
die Polymerschmelze nach Zugabe der Verstärkungsfasern (7) in der Plastifiziereinheit entlüftet wird und das physikalische Treibmittel der Polymerschmelze nach dem Passieren der Plastifiziereinheit (1) in einem separat zwischen Plastifiziereinheit (1) und Einspritzzylinder (22) angeordnetem Übergabezylinder (12) über eine Begasungseinheit (13) zugegeben wird.

2. Verfahren nach Anspruch 1 ,
**dadurch gekennzeichnet, dass**
eine Begasungseinheit (13) mit einem zumindest teilweise porösen, von einer Druckkammer umgebenen, mit dem physikalischen Treibmittel beaufschlagten Hohlzylinderelement (16) eingesetzt wird.

3. Verfahren nach einem der Ansprüche 1 oder 2,
**dadurch gekennzeichnet, dass**
ein Hohlzylinderelement (16) mit einer mit dem physikalischen Treibmittel beaufschlagten porösen Kontaktfläche (25) aus Sintermetall eingesetzt wird.

4. Verfahren nach einem der Ansprüche 1 oder 2,
**dadurch gekennzeichnet, dass**
ein Hohlzylinderelement (16) mit separaten, mit dem physikalischen Treibmittel beaufschlagten Einlässen aus gasdurchlässigem Material eingesetzt wird.

5. Verfahren nach einem der Ansprüche 1 bis 4,
**dadurch gekennzeichnet, dass**
ein im Hohlzylinderelement (16) angeordneter, mit einem Treibgas beaufschlagbarer und eine poröse Kontaktfläche aufweisender Torpedo eingesetzt wird.

6. Verfahren nach einem der Ansprüche 1 bis 5,
**dadurch gekennzeichnet, dass**
ein im Bereich des Übergabezylinders (12) im Hohlzylinderelement (16) selber angeordneter oder dem Hohlzylinderelement (16) nachgeordneter Mischer (18) eingesetzt wird.

7. Verfahren nach einem der Ansprüche 1 bis 6,
**dadurch gekennzeichnet, dass**
als Mischer (18) ein im Hohlzylinderelement (16) fixierter und zumindest teilweise in die Polymerschmelze hineinragende Stege (19) als Mischelemente aufweisender, statischer Mischer eingesetzt wird.

8. Verfahren nach einem der Ansprüche 1 bis 7,
**dadurch gekennzeichnet, dass**
beheizbare Mischer (18), Übergabezylinder (12) und/oder Einspritzzylinder (22) eingesetzt werden.

9. Verfahren nach einem der Ansprüche 1 bis 8,
**dadurch gekennzeichnet, dass**
als Material für die Polymermatrix ein thermoplastischer Kunststoff eingesetzt wird, ausgewählt aus der Gruppe Polypropylen (PP), Polyethylen (PE), Polybutylenterephthalat (PBT), Polyamid (PA), Polystyrol (PS), Polycarbonat (PC), Polymethylmethacrylat (PMMA), Acrylnitril-Butadien-Styrol (ABS), Acrylnitril-Butadien-Styrol / Polycarbonat Copolymerisat (ABS-PC), Polyoxymethylen (POM) oder Mischungen davon.

10. Verfahren nach einem der Ansprüche 1 bis 9,
**dadurch gekennzeichnet, dass**
als Fasern Glasfasern, Karbonfasern, Nylonfasern oder textile Naturfasern eingesetzt werden.

11. Vorrichtung zur Herstellung von faserverstärkten geschäumten Kunststoffformteilen mit
a) einer Plastifiziereinheit (1) zur Herstellung einer Fasern enthaltenden Polymerschmelze,
b) eine Begasungseinheit (13) zum Beaufschlagen der Polymerschmelze mit einem physikalischen Treibmittel und
c) einem ein Formwerkzeug (10) und einen Einspritzzylinder (22) umfassendes Spritzwerkzeug (8) zur Verarbeitung der Treibmittel beladenden und Fasern enthaltenen Polymerschmelze,
wobei die Plastifiziereinheit (1) ein Schneckenextruder (2) ist mit mehreren separaten, hintereinander angeordneten Einlässen (4,5,6), wobei der erste Einlass (4) für die Zugabe des Granulats (21) vorgesehen ist und im vorderen Drittel eine Zuführung für die Verstärkungsfasern (7) vorgesehen ist, **dadurch gekennzeichnet, dass** nach der Zuführung der Verstärkungsfasern (7) an der Spitze der Plastifiziereinheit (1) eine Einrichtung (24) zum Entlüften der Polymerschmelze vorgesehen ist und einem separaten Übergabezylinder (12) zum Einbringen des physikalischen Treibmittels in die Polymerschmelze vorgesehen ist, wobei der zwischen der Plastifiziereinheit (1) und dem Einspritzzylinder (22) angeordnete Übergabezylinder (12) die Begasungseinheit (13) aufweist.

12. Vorrichtung nach Anspruch 11,
**dadurch gekennzeichnet, dass**
die Begasungseinheit (13) ein zumindest teilweise poröses, von einer Druckkammer umgebenes, mit dem physikalischen Treibmittel beaufschlagtes Hohlzylinderelement (16) umfasst.

13. Vorrichtung nach einem der Ansprüche 11 oder 12,
**dadurch gekennzeichnet, dass**
das Hohlzylinderelement (16) eine mit dem physikalischen Treibmittel beaufschlagte poröse Kontaktfläche (25) aus Sintermetall aufweist.

14. Vorrichtung nach einem der Ansprüche 11 oder 12,
**dadurch gekennzeichnet, dass**
das Hohlzylinderelement (16) separate, mit dem physikalischen Treibmittel beaufschlagte Einlässe aus gasdurchlässigem Material umfasst.

15. Vorrichtung nach einem der Ansprüche 11 bis 14,
**dadurch gekennzeichnet, dass**
im Hohlzylinderelement (16) ein mit Treibgas beaufschlagbarer, eine poröse Kontaktfläche aufweisender Torpedo angeordnet ist.

16. Vorrichtung nach einem der Ansprüche 11 bis 15,
**dadurch gekennzeichnet, dass**
im Bereich des Übergabezylinders (12) im Hohlzylinderelement (16) selber oder dem Hohlzylinder (16) nachgeordnet ein Mischer (18) vorgesehen ist.

17. Vorrichtung nach Anspruch 16,
**dadurch gekennzeichnet, dass**
der Mischer (18) als statischer Mischer im Hohlzylinderelement (16) fixiert ist und zumindest teilweise in die Polymerschmelze hineinragende Stege (19) als Mischelemente aufweist.

18. Vorrichtung nach einem der Ansprüche 11 bis 17,
**dadurch gekennzeichnet, dass**
der Mischer (18), der Übergabezylinder (12) und/oder der Einspritzzylinder (22) beheizbar sind.

19. Vorrichtung nach einem der Ansprüche 11 bis 18,
**dadurch gekennzeichnet, dass**
das Spritzwerkzeug (8) ein Formwerkzeug (10) mit einer expandierbaren Formkavität (11) umfasst.

## Claims

1. Method for producing a fibre-reinforced, foamed plastic moulded part, wherein
a) in a first step, a polymer melt containing fibres is obtained from a granulate (21) of a thermoplastic plastic and reinforcement fibres (7) in a plasticising unit (1),
b) in a second step, the polymer melt is displaced with a physical propellant, and
c) then, in a third step, is injected into a mould cavity (11) of a moulding tool (10) under pressure via an injection cylinder (22), wherein a screw extruder (2) is used as a plasticising unit (1), having several separate inlets (4, 5, 6) arranged one behind the other, wherein the first inlet (4) is provided for the addition of the granulate (21),
the granulate (21) is plasticised by heating and then the reinforcement fibres (7) are supplied to the plasticising unit (1),
wherein a supply for the reinforcement fibres (7) is provided in the front third,
**characterised in that**
the polymer melt is ventilated in the plasticising unit after addition of the reinforcement fibres (7), and the physical propellant is added to the polymer melt in a transfer cylinder (12) arranged separately between the plasticising unit (10) and the injection cylinder (22) via a gas injection unit (13) after passing the plasticising unit (1).

2. Method according to claim 1,
**characterised in that**
a gas injection unit (13) is used, having an at least partially porous hollow cylinder element (16) which is surrounded by a pressure chamber and is impinged with the physical propellant.

3. Method according to one of claims 1 or 2,
**characterised in that**
a hollow cylinder element (16) is used, having a porous contact surface (25) made from sintered metal, said contact surface being impinged with the physical propellant.

4. Method according to one of claims 1 or 2,
**characterised in that**
a hollow cylinder element (16) is used, having separate inlets made from gas-permeable material, said inlets being impinged with the physical propellant.

5. Method according to one of claims 1 to 4,
**characterised in that**
a torpedo which is arranged in the hollow cylinder element (16), is able to be impinged with a gas propellant and has a porous contact surface is used.

6. Method according to one of claims 1 to 5,
**characterised in that**
a mixer (18) which is arranged in the region of the transfer cylinder (12) in the hollow cylinder element (16) itself or is subordinate to the hollow cylinder element (16) is used.

7. Method according to one of claims 1 to 6,
**characterised in that**
a static mixer which has a bar (19) as a mixing element, said bar being fixed in the hollow cylinder element (16) and projecting at least partially into the polymer melt, is used as the mixer (18).

8. Method according to one of claims 1 to 7,
**characterised in that**
heatable mixers (18), transfer cylinders (12) and/or injection cylinders (22) are used.

9. Method according to one of claims 1 to 8,
**characterised in that**
a thermoplastic plastic is used as the material for the polymer matrix, selected from the group of polypropylene (PP), polyethylene (PE), polybutylene terephthalate (PBT), polyamide (PA), polystyrene (PS), polycarbonate (PC), polymethyl methacrylate (PMMA), acrylonitrile butadiene styrene (ABS), acrylonitrile butadiene styrene / polycarbonate copolymer (ABS-PC), polyoxymethylene (POM) or mixtures thereof.

10. Method according to one of claims 1 to 9,
**characterised in that**
glass fibres, carbon fibres, nylon fibres or textile natural fibres are used as fibres.

11. Device for producing fibre-reinforced, foamed plastic moulded parts having
a) a plasticising unit (1) for producing a polymer melt containing fibres,
b) a gas injection unit (13) for impinging the polymer melt with a physical propellant, and
c) an injection tool (8) comprising a moulding tool (10) and an injection cylinder (22), for processing the polymer melt loaded with propellant and containing fibres,
wherein the plasticising unit (1) is a screw extruder (2) having several separate inlets (4, 5, 6) arranged one behind the other, wherein the first inlet (4) is provided for the addition of the granulate (21) and a supply for the reinforcement fibres (7) is provided in the front third,
**characterised in that**
after the supply of the reinforcement fibres (7), a device (24) for ventilating the polymer melt is provided at the top of the plasticising unit (1), and a separate transfer cylinder (12) for introducing the physical propellant into the polymer melt is provided, wherein the transfer cylinder (12) arranged between the plasticising unit (1) and the injection cylinder (22) contains the gas injection unit (13).

12. Device according to claim 11,
**characterised in that**
the gas injection unit (13) comprises an at least partially porous hollow cylinder element (16) surrounded by a pressure chamber and impinged with the physical propellant.

13. Device according to one of claims 11 or 12,
**characterised in that**
the hollow cylinder element (16) has a porous contact surface (25) made from sintered metal, said contact surface being impinged with the physical propellant.

14. Device according to one of claims 11 or 12,
**characterised in that**
the hollow cylinder element (16) comprises separate inlets made from gas-permeable material, said inlets being impinged with the physical propellant.

15. Device according to one of claims 11 to 14,
**characterised in that**
a torpedo which is able to be impinged with gas propellant and has a porous contact surface is arranged in the hollow cylinder element (16).

16. Device according to one of claims 11 to 15,
**characterised in that**
a mixer (18) is provided in the region of the transfer cylinder (12) in the hollow cylinder element (16) itself or subordinate to the hollow cylinder (16).

17. Device according to claim 16,
**characterised in that**
the mixer (18) is fixed in the hollow cylinder element (16) as a static mixer and has bars (19) as mixing elements which at least partially project into the polymer melt.

18. Device according to one of claims 11 to 17,
**characterised in that**
the mixer (18), the transfer cylinder (12) and/or the injection cylinder (22) are heatable.

19. Device according to one of claims 11 to 18,
**characterised in that**
the injection tool (8) comprises a moulding tool (10) having an expandable mould cavity (11).

## Revendications

1. Procédé de fabrication d'une pièce moulée en matériau synthétique expansé renforcé par des fibres selon lequel :
a) dans une première étape, on fabrique à partir de granulés (21) d'un matériau synthétique thermoplastique et de fibres de renfort (7), dans une unité de ramollissement (1) une masse polymère fondue renfermant des fibres,
b) dans une seconde étape, on fait réagir la masse polymère fondue avec un agent d'expansion, et
c) dans une troisième étape, on effectue une injection sous pression par l'intermédiaire d'un cylindre d'injection (22) dans une cavité de moulage (11) d'un outil de moulage (10),
procédé selon lequel en tant qu'unité de ramollissement (1) on utilise une extrudeuse à vis sans fin (2) équipée de plusieurs entrées séparées (4, 5, 6) situées les unes derrière les autres, la première entrée (4) étant destinée à l'introduction des granulés (21),
les granulés (21) sont ramollis par chauffage puis, les fibres de renfort (7) sont introduites dans l'unité de ramollissement (1),
dans le tiers avant de laquelle, il est prévu une entrée d'introduction des fibres de renfort,
**caractérisé en ce qu'**
après introduction des fibres de renfort (7) dans l'unité de ramollissement, la masse polymère fondue est désaérée et l'agent d'expansion physique est ajouté à la masse polymère fondue après son passage dans l'unité de ramollissement (1) dans un cylindre de transfert (12) monté entre l'unité de ramollissement (1) et le cylindre d'injection (22), par l'intermédiaire d'une unité de gazage (13).

2. Procédé conforme à la revendication 1,
**caractérisé en ce que**
l'on utilise une unité de gazage (13) comportant un élément cylindrique creux (16) au moins partiellement poreux, entouré d'une chambre de pression, et alimenté en agent d'expansion physique.

3. Procédé conforme à l'une des revendications 1 et 2,
**caractérisé en ce que**
l'on utilise un élément cylindrique creux (16) comportant une surface de contact poreuse (25) en métal fritté alimentée en agent d'expansion physique.

4. Procédé conforme à l'une des revendications 1 et 2,
**caractérisé en ce que**
l'on utilise un élément cylindrique creux (16) équipé d'entrées en un matériau perméable aux gaz alimentées en agent d'expansion physique.

5. Procédé conforme à l'une des revendications 1 à 4,
**caractérisé en ce que**
l'on utilise une torpille montée dans l'élément cylindrique creux (16), pouvant être alimentée en gaz d'expansion et comportant une surface de contact poreuse.

6. Procédé conforme à l'une des revendications 1 à 5,
**caractérisé en ce que**
l'on utilise un mélangeur (18) installé dans la zone du cylindre de transfert (12) dans l'élément cylindrique creux (16) lui-même, ou monté en aval de l'élément cylindrique creux (16).

7. Procédé conforme à l'une des revendications 1 à 6,
**caractérisé en ce qu'**
en tant que mélangeur (18) on utilise un mélangeur statique comportant en tant qu'éléments mélangeurs des barreaux (19) fixés dans l'élément cylindrique creux (16) et pénétrant au moins partiellement dans la masse polymère fondue.

8. Procédé conforme à l'une des revendications 1 à 7,
**caractérisé en ce que**
l'on utilise un mélangeur (18), un cylindre de transfert (12) et/ou un cylindre d'injection (22) pouvant être chauffé(s).

9. Procédé conforme à l'une des revendications 1 à 8,
**caractérisé en ce que**
l'on utilise en tant que matériau constitutif de la matrice polymère, un matériau synthétique thermoplastique choisi dans le groupe formé par les matériaux thermoplastiques suivants : polypropylène (PP), polyéthylène (PE), polybutylène téréphtalate (PBT), polyamide (PA), polystyrène (PS), polycarbonate (PC), poly méthyl méthacrylate (PMMA), acrylonitrile butadiène styrène (ABS), copolymère acrylonitrile butadiène styrène / polycarbonate (ABS-PC), polyoxyméthylène (POM) et leurs mélanges.

10. Procédé conforme à l'une des revendications 1 à 9,
**caractérisé en ce qu'**
en tant que fibre on utilise des fibres de verre, des fibres de carbone, des fibres de nylon ou des fibres textiles naturelles.

11. Dispositif permettant la fabrication de pièces moulées en matériau synthétique expansé renforcé par des fibres comprenant :
a) une unité de ramollissement (1) destinée à permettre d'obtenir une masse polymère fondue renfermant des fibres,
b) une unité de gazage (13) permettant de fournir à la masse polymère fondue un agent d'expansion physique, et
c) un outil d'injection (8) comprenant un outil de moulage (10) et un cylindre d'injection (22) permettant de traiter la mousse polymère fondue chargée en l'agent d'expansion et renfermant des fibres,
dispositif dans lequel
l'unité de ramollissement (1) est une extrudeuse à vis sans fin (2) ayant plusieurs entrées (4, 5, 6) séparées situées les unes derrière les autres, la première entrée (4) étant destinée à l'introduction des granulés (21), et, une entrée d'alimentation des fibres de renfort (7) est située dans le tiers avant de l'extrudeuse à vis sans fin,
**caractérisé en ce qu'**
après l'entrée d'alimentation des fibres de renfort (7), au niveau de la pointe de l'unité de ramollissement (1) il est prévu un dispositif (24) de désaération de la masse polymère fondue et un cylindre de transfert séparé (12) pour permettre l'introduction de l'agent d'expansion physique dans la masse polymère fondue, le cylindre de transfert (12) installé entre l'unité de ramollissement (1) et le cylindre d'injection (22) comprenant l'unité de gazage (13).

12. Procédé conforme à la revendication 11,
**caractérisé en ce que**
l'unité de gazage (13) comprend un élément cylindrique creux (16) au moins partiellement poreux, entouré par une chambre de pression et alimenté en agent d'expansion physique.

13. Procédé conforme à l'une des revendications 11 et 12,
**caractérisé en ce que**
l'élément cylindrique creux (16) comprend une surface de contact poreuse (25) en métal fritté alimentée en agent d'expansion physique.

14. Dispositif conforme à l'une des revendications 11 et 12,
**caractérisé en ce que**
l'élément cylindrique creux (16) comprend des entrées séparées en un matériau perméable aux gaz alimentées en agent d'expansion physique.

15. Dispositif conforme à l'une des revendications 11 à 14,
**caractérisé en ce que**
dans l'élément cylindrique creux (16) est montée une torpille pouvant être alimentée en gaz d'expansion et ayant une surface de contact poreuse.

16. Dispositif conforme à l'une des revendications 11 à 15,
**caractérisé en ce qu'**
il est prévu un mélangeur (18) installé dans la zone du cylindre de transfert (12) dans l'élément cylindrique creux (16) lui-même ou monté en aval de cet élément cylindrique creux (16).

17. Dispositif conforme à la revendication 16,
**caractérisé en ce que**
le mélangeur (18) est fixé dans l'élément cylindrique creux (16) sous la forme d'un mélangeur statique et comporte en tant qu'éléments mélangeurs des barreaux (19) pénétrant au moins partiellement dans la masse polymère fondue.

18. Dispositif conforme à l'une des revendications 11 à 17,
**caractérisé en ce que**
le mélangeur (18), le cylindre de transfert (12) et/ou le cylindre d'injection (22) est (peuvent être) chauffé(s).

19. Dispositif conforme à l'une des revendications 11 à 18,
**caractérisé en ce que**
l'outil d'injection (8) comprend un outil de moulage (10) ayant une cavité de moulage expansible (11).
